# EUROPÄISCHE PATENTSCHRIFT

(11) **EP 0 866 750 B1**
(45) Veröffentlichungstag und Bekanntmachung des Hinweises auf die Patenterteilung: **18.04.2001**
(21) Anmeldenummer: 97944758.8
(22) Anmeldetag: 14.08.1997
(51) Int. Cl.: B41M 5/24, G09F 3/02, B41M 3/14, B32B 27/08, B32B 15/08

(54) **MIT EINEM LASERSTRAHL BESCHRIFTBARE FOLIE**
FOIL CAPABLE OF BEING INSCRIBED BY A LASER BEAM
FEUILLE SUSCEPTIBLE D'ETRE INSCRITE AU MOYEN D'UN FAISCEAU LASER

(30) Priorität: 11.10.1996 DE 19642040
(43) Veröffentlichungstag der Anmeldung: 30.09.1998
(73) Patentinhaber: SCHREINER ETIKETTEN UND SELBSTKLEBETECHNIK GMBH & CO., 85764 Oberschleissheim (DE)
(72) Erfinder: KÖSSLINGER, Robert, D-80335 München (DE)
(74) Vertreter: Kehl, Günther, Dipl.-Phys.
(86) Internationale Anmeldenummer: EP9704449
(87) Internationale Veröffentlichungsnummer: WO9816397

(56) Entgegenhaltungen:
- EP-A- 0 645 747
- EP-A- 0 684 145
- DE-A- 4 131 964
- DE-A- 19 541 453
- DE-C- 4 134 271
- NL-A- 8 902 604
- US-A- 4 847 181

## Beschreibung

### Gebiet der Erfindung

Die Erfindung betrifft eine mit einem Laserstrahl beschriftbare Folie, die mindestens eine für den Laserstrahl durchlässige Schutzfolie aufweist, auf deren Unterseite ein durch den Laserstrahl veränderbares Medium angeordnet ist, wobei das durch den Laserstrahl veränderbare Medium mindestens eine opake, durch den Laserstrahl ablatierbare Schicht aufweist.

Unter einer Beschriftung sind im folgenden graphische Symbole und Zeichen jeglicher Art zu verstehen.

### Beschreibung des Standes der Technik

Eine Folie dieser Art ist aus der deutschen Offenlegungsschrift 195 41 453 A1 bekannt. Die bekannte Folie weist keine Kontrastschicht auf. Der Kontrast zu der durch den Laserstrahl ablatierbaren Schicht wird bei der bekannten Folie nach der Beschriftung derselben durch Anbringen auf einem Gegenstand erzielt. Die bekannte Folie kann nur auf solchen Gegenständen verwendet werden, die eine kontrastierende Farbe aufweisen. Der deutschen Offenlegungsschrift 195 41 453 A1 ist des weiteren der Vorschlag zu entnehmen, nach Beschriftung einer Folie diese mit einer Beschichtung zu versehen, die einen unterschiedlichen Farbton aufweist.

Eine mit einem Laserstrahl beschriftbare Folie ist aus der europäischen Patentanmeldung EP 0 688 678 A1 bekannt. Bei der bekannten Folie besteht das veränderbare Medium aus einer Trägerschicht aus Kunststoff, in die ein sich bei Laserbestrahlung optisch veränderndes Additiv, wie zum Beispiel Kupferhydroxidphosphat, eingearbeitet ist. Die Herstellung einer solchen Kunststoffträgerschicht ist aufwendig, und die Möglichkeiten der Gestaltung der Farbe der Beschriftung sind beschränkt. Außerdem ist die Konturenschärfe der erzeugten Beschriftung nicht völlig zufriedenstellend.

Die europäische Patentanmeldung EP 0 645 747 A2 offenbart ein laserbeschriftbares Etikettenmaterial, das eine erste Schicht und eine von der ersten Schicht optisch differierende zweite Schicht aufweist. Die beiden Schichten sind auf die beiden Seiten einer transparenten Trägerschicht aufgebracht. Die erste Schicht wird direkt mittels Laserstrahlung entsprechend einem gewünschten Schrift- oder Druckbild entfernt, wodurch die Oberfläche der zweiten Schicht sichtbar wird.

Bei diesem Etikettenmaterial können zwar die Farben für Schriftzeichen oder Bilder sowie die Hintergrundfarbe frei gewählt werden, nach dem Beschriftungsvorgang ist die Beschriftung jedoch ungeschützt und kann leicht beschädigt werden. Um die Beschriftung zu schützen, könnte beispielsweise nach dem Beschriftungsvorgang eine transparente Schutzfolie über das Etikettenmaterial geklebt werden. Es hat sich jedoch gezeigt, daß das Anbringen einer solchen Schutzfolie, insbesondere bei der Serienfertigung von Gegenständen, ein äußerst lästiger und zeitraubender Schritt ist, der meist von Hand ausgeführt werden muß und dadurch den Fertigungsprozeß erheblich stört.

Aus der deutschen Offenlegungsschrift DE 41 31 964 A1 ist es bekannt, ein Hologramm dadurch zu beschriften, daß dieses mit einem Laserstrahl lokal bearbeitet und zerstört wird.

### KERN DER ERFINDUNG

Ausgehend von den vorstehenden Nachteilen und Unzulänglichkeiten der nach dem Stand der Technik bekannten Folien liegt der vorliegenden Erfindung die Aufgabe zugrunde, eine mit einem Laserstrahl beschriftbare Folie der eingangs genannten Art bereitzustellen, die schnell und kostengünstig, das heißt durch wenige Laminierungsschritte herstellbar und bei hoher Produktqualität einfach weiterverarbeitbar ist.

Des weiteren zielt die vorliegende Erfindung auf eine Folie ab, die beim Beschriften mit dem Laserstrahl praktisch keinerlei gesundheitsgefährdende und umweltschädigende Emissionen hervorruft.

Darüber hinaus liegt der vorliegenden Erfindung die Aufgabe zugrunde, eine mit einem Laserstrahl beschriftbare Folie zu schaffen, die einen großen immanenten Schutz des Schriftbildes gegenüber chemischen und mechanischen Beanspruchungen bietet.

Schließlich zielt die vorliegende Erfindung auf eine Folie ab, die dem Endverbraucher trotz einer einfachen Struktur flexible und vielfältige Anwendungsmöglichkeiten eröffnet.

Die Aufgabe wird bei einer Folie der eingangs genannten Art dadurch gelöst, daß das durch den Laserstrahl veränderbare Medium zusätzlich mindestens eine gegen den Laserstrahl weitgehend resistente kontrastbildende Schicht aufweist.

Unter "ablatierbar" ist dabei eine Schicht zu verstehen, die durch die Wirkung des Laserstrahls abgetragen oder zerstört wird, so daß sie ihre Opazität verliert.

Hierdurch wird gemäß der vorliegenden Erfindung eine mit einem Laserstrahl beschriftbare Folie bereitgestellt, die schnell und kostengünstig, das heißt durch wenige Laminierungsschritte herstellbar und bei hoher Produktqualität einfach weiterverarbeitbar ist, wobei dem Endverbraucher trotz der einfachen Struktur der Folie flexible und vielfältige Anwendungsmöglichkeiten eröffnet werden. Der Endverbraucher kann beispielsweise die Folie gemäß der Erfindung als Rohmaterial gewissermaßen als Meterware, beziehen und sie zu Etiketten bei Bedarf weiterverarbeiten, d.h. mit einem Laser beschriften, auf die gewünschte Größe schneiden und eventuell mit einer Klebstoffschicht versehen. Es ist jedoch auch denkbar, die Folie für die Zwecke des Endverbrauchers auf der Herstellerseite vorzubereiten, d.h. eventuell mit einer Selbstklebeschicht zu versehen und/oder in einer gewünschten Größe auszustanzen und/oder mit einer Beschriftung zu versehen, die beim Endverbraucher beispielsweise durch Hinzufügen einer Seriennummer ergänzt werden kann. In jedem Fall ist die Beschriftung durch die Schutzfolie geschützt und der Endverbraucher muß sich nicht mit dem zeitraubenden Vorgang des Anbringens oder Auflaminieren der Schutzfolie befassen.

Da die opake, durch den Laserstrahl ablatierbare Schicht zwischen der Schutzfolie und der kontrastbildenden Schicht eingeschlossen ist, werden beim Beschriften des Etiketts mit dem Laserstrahl praktisch keinerlei gesundheitsgefährdende und umweltschädigende Emissionen hervorgerufen, wobei das Etikett einen großen immanenten Schutz des Schriftbildes gegenüber chemischen und mechanischen Beanspruchungen bietet.

Die ablatierbare Schicht ist bevorzugt eine überwiegend metallische Schicht, da eine solche sich vorzüglich für die Bearbeitung mit einem Laserstrahl eignet.

Durch die Wahl des Metalls oder der Metallegierung kann der Schicht eine bestimmte Farbe verliehen werden.

Gemäß einer bevorzugten Ausführungsform der vorliegenden Erfindung handelt es sich bei der metallischen Schicht um eine auf die Schutzfolie aufgedampfte Metallisierung, wobei die metallische Schicht mindestens ein Hologramm enthalten kann. Alternativ oder in Ergänzung hierzu kann die metallische Schicht auch eine Färbung aufweisen. Es hat sich gezeigt, daß die Beschriftung bei einer solchen Folie besonders konturenscharf wird. Als Metall hat sich insbesondere Aluminium bewährt. Das Metall kann aufgedampft oder aufgesputtert werden.

Nach einer bevorzugten Ausführungsform weist die ablatierbare Schicht eine Dicke von ca. 3 *µ*m auf und eignet sich dadurch besonders für eine zügige Ablatierung mit dem Laserstrahl.

Nach einer weiteren vorteilhaften Ausführungsform weist die Schicht lediglich eine Dicke von 0,1 *µ*m bis 0,4 *µ*m auf, d.h. ein Viertel der Wellenlänge einer Komponente des sichtbaren Lichts, und erzeugt somit durch Interferenzwirkung einen Farbeffekt, der sich bei Laserstrahlbehandlung empfindlich ändert.

Vorteilhafterweise ist die kontrastbildende Schicht auf die metallische Schicht aufgetragen, sei es beispielsweise durch Aufdrucken oder durch Auflackieren.

Nach einer weiteren vorteilhaften Ausführungsform weist die kontrastbildende Schicht mehrere Bereiche unterschiedlicher Farbe auf, so daß sich auf einfache Weise eine mehrfarbige Beschriftung der Folie erzeugen läßt.

Nach einer geeigneten Ausführungsform der Folie gemäß der vorliegenden Erfindung handelt es sich bei der kontrastbildenden Schicht um mindestens eine Folie, die vorzugsweise eine Färbung aufweist und/oder die üblicherweise aus Kunststoff, vorzugsweise aus Polyethylen (PE), Polyethylenterephthalat (PET) oder Polyvinylchlorid (PVC), besteht.

Alternativ hierzu kann auf der der metallischen Schicht abgewandten Seite der kontrastbildenden Schicht zumindest stellenweise eine Klebstoffschicht angeordnet sein, die vorzugsweise eine Färbung aufweist und/oder die zweckmäßigerweise mit einem Trägermaterial, vorzugsweise einer klebstoffabweisenden Trägerfolie, bedeckt ist.

Gemäß einer bevorzugten Ausgestaltungsform des vorliegenden Etiketts ist die für den Laserstrahl durchlässige Schutzfolie, auf deren Unterseite ein durch den Laserstrahl veränderbares Medium angeordnet ist, transparent und/oder besteht aus Kunststoff, vorzugsweise aus Polyester, Acrylat, Polyethylen (PE), Polyethylenterephthalat (PET), Polypropylen (PP) oder Polyvinylchlorid (PVC), wobei Polyester besonders geeignet ist.

Nach einer weiteren Ausführungsform ist auf der Schutzfolie ein Abdeckabschnitt angeordnet, der beispielsweise die Schutzfolie vor Verschmutzung während eines Produktionsvorganges schützt und der danach entfernt werden kann.

Die Erfindung wird nachstehend anhand von schematisch dargestellten Ausführungsbeispielen näher erläutert. Um den Aufbau der Folie 3 gemäß der vorliegenden Erfindung zu veranschaulichen, sind die Dimensionen der einzelnen Komponenten der Folie 3 in nicht maßstabsgetreuer Ansicht wiedergegeben. Es zeigt:

### KURZE BESCHREIBUNG DER ZEICHNUNGEN

- Figur 1:: Ein erstes Ausführungsbeispiel einer mit einem Laserstrahl beschriftbaren Folie.
- Figur 2:: Ein zweites Ausführungsbeispiel einer mit einem Laserstrahl beschriftbaren Folie.
- Figur 3:: Ein drittes Ausführungsbeispiel einer mit einem Laserstrahl beschriftbaren Folie.
- Figur 4:: Eine Schicht der Folie gemäß Figur 3 in der Draufsicht.
- Figur 5:: Eine beschriftete Folie in der Draufsicht.
- Figur 6:: Ein viertes Ausführungsbeispiel einer mit einem Laserstrahl beschriftbaren Folie.
- Figur 7:: Eine Teilfolie des Ausführungsbeispiel der Figur 6 in der Draufsicht.

### DETAILLIERTE BESCHREIBUNG

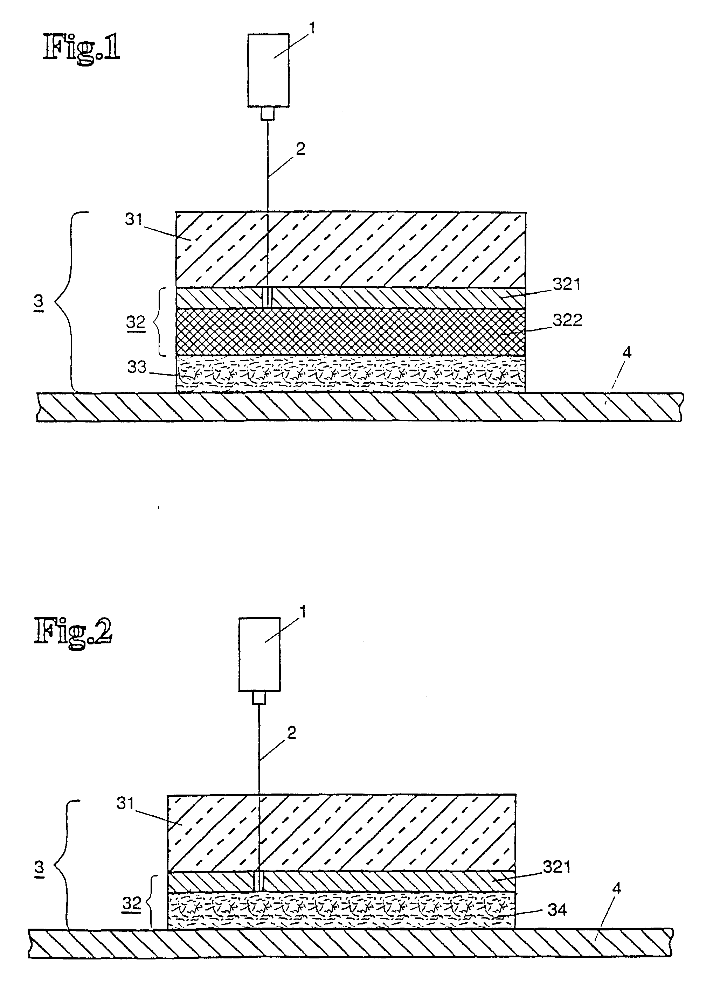

Aus Fig. 1 ist zu entnehmen, daß ein Laser 1, beispielsweise ein Kohlendioxid-Laser oder ein Neodym-YAG-Laser, den Laserstrahl 2 emittiert, der durch eine für den Laserstrahl 2 durchlässige, transparente Schutzfolie 31 hindurchtritt, die aus Kunststoff, wie etwa aus Acrylat, Polyethylen (PE), Polyethylenterephthalat (PET), Polypropylen (PP) oder Polyvinylchlorid (PVC), vorzugsweise Polyester, besteht. Die Schutzfolie weist vorzugsweise eine Dicke von ca. 25*µ*m auf.

Auf der Unterseite der Schutzfolie 31, d. h. auf der Seite der Schutzfolie, die dem Laser abgewandt ist, ist ein durch den Laserstrahl 2 veränderbares Medium 32 angeordnet, das eine metallische Schicht 321, beispielsweise eine auf die Schutzfolie 31 aufgedampfte Metallisierung, und eine kontrastbildende Schicht 322 aufweist. Bei der metallischen Schicht handelt es sich vorzugsweise um eine auf die Schutzfolie 31 aufgedampfte Aluminiumschicht, die in einer solchen Dicke (vorzugsweise etwa 3*µ*m) aufgedampft wird, daß sie undurchsichtig ist und somit die Sicht auf die kontrastbildende Schicht versperrt. Bei der kontrastbildenden Schicht 322 handelt es sich vorzugsweise um eine Schicht Druckfarbe, vorzugsweise Flexodruckfarbe, die auf die metallische Schicht mit einem bevorzugten Auftragsgewicht von 6 g/m² aufgedruckt wurde. Durch die kontrastbildende Schicht 322 wird die metallische Schicht versiegelt, d.h. zwischen der Schutzfolie 31 und der kontrastbildenden Schicht 322 eingeschlossen, so daß keine schädlichen Emissionen bei der Laserbehandlung nach außen treten können.

Alternativ zum Aufdampfen der metallischen Schicht besteht auch die Möglichkeit, die metallische Schicht durch Sputtern aufzutragen.

Durch die Einwirkung des Laserstrahls wird die metallische Schicht 321 ablatiert, d.h. sie verschwindet an den Stellen, an denen der Laserstrahl 2 auf sie einwirkt. Es erfolgt eine für einen Betrachter deutlich erkennbare konturenscharfe Beschriftung der Folie 3 an den Stellen, an denen die metallische Schicht 321 durch Einwirken des Laserstrahls 2 verdampft und somit partiell die Sicht auf die kontrastbildende Schicht 322 freigegeben wird. Feinste Metalltröpfchen, die sich nach dem Abdampfen der metallischen Schicht niederschlagen, sind praktisch nicht wahrnehmbar und stören das Beschriftungsbild in keiner Weise. Entscheidend ist, daß die Struktur der Schicht zerstört wird.

Es ist in diesem Zusammenhang anzumerken, daß bei hinreichend dünner Ausführung der metallischen Schicht 321 die Einwirkung durch den Laserstrahl 2 zeitlich sehr kurz gehalten werden kann, so daß weder die Schutzfolie 31 noch die kontrastbildende Schicht 322 in irgendeiner Form beeinträchtigt werden; insbesondere kann ein signifikanter Materialaustrag durch Aerosolbildung auf diese Weise zuverlässig vermieden werden, so daß beim Beschriftungsvorgang mit dem Laserstrahl 2 sowohl die Schutzfolie 31 als auch die kontrastbildende Schicht 322 allenfalls ausgesprochen geringfügig in Mitleidenschaft gezogen werden.

Weist hierbei die metallische Schicht 321 und/oder die kontrastbildende Schicht 322 eine Färbung auf, so führt dies beim Endverbraucher dann zu einer hohen Flexibilität hinsichtlich der Farbauswahl, wenn sich die Färbung der kontrastbildenden Schicht 322 von der Färbung der metallischen Schicht 321 unterscheidet. Bei der kontrastbildenden Schicht 322 handelt es sich in der Praxis um eine gefärbte Folie, die üblicherweise aus Kunststoff, vorzugsweise aus Polyethylen (PE), Polyethylenterephthalat (PET) oder Polyvinylchlorid (PVC), besteht.

Auf der der metallischen Schicht 321 abgewandten Seite der kontrastbildenden Schicht 322 ist in Fig. 1 eine Klebstoffschicht 33 angeordnet, die mit einer klebstoffabweisenden Trägerfolie 4 bedeckt ist.

Die in Fig. 1 gezeigte, mit einem Laserstrahl 2 beschriftbare Folie 3 ist schnell und kostengünstig, das heißt durch wenige Laminierungsschritte herstellbar und bei hoher Produktqualität einfach weiterverarbeitbar, wobei dem Endverbraucher trotz der einfachen Struktur der Folie 3 flexible und vielfältige Anwendungsmöglichkeiten eröffnet werden.

Besonders hervorzuheben ist in diesem Zusammenhang, daß beim Beschriften der Folie 3 mit dem Laserstrahl 2 praktisch keinerlei gesundheitsgefährdende und umweltschädigende Emissionen hervorgerufen werden, da der Bereich, in dem die Gravur stattfindet, durch die Schutzfolie versiegelt ist. Die Folie 3 bietet einen großen immanenten Schutz des eingravierten Schriftbildes gegenüber chemischen und mechanischen Beanspruchungen.

Figur 2 zeigt eine mit einem Laserstrahl beschriftbare Folie 3 gemäß der Erfindung, die ähnlich der in Figur 1 gezeigten Folie aufgebaut ist. Als kontrastbildende Schicht wirkt hier eine eingefärbte, gegen Laserstrahlung resistente Klebstoffschicht 34. Die in Figur 1 gezeigte kontrastbildende Schicht 322 und die Klebstoffschicht sind gewissermaßen zu einer einzigen Schicht, nämlich der Klebstoffschicht 34, in Figur 2 vereinigt.

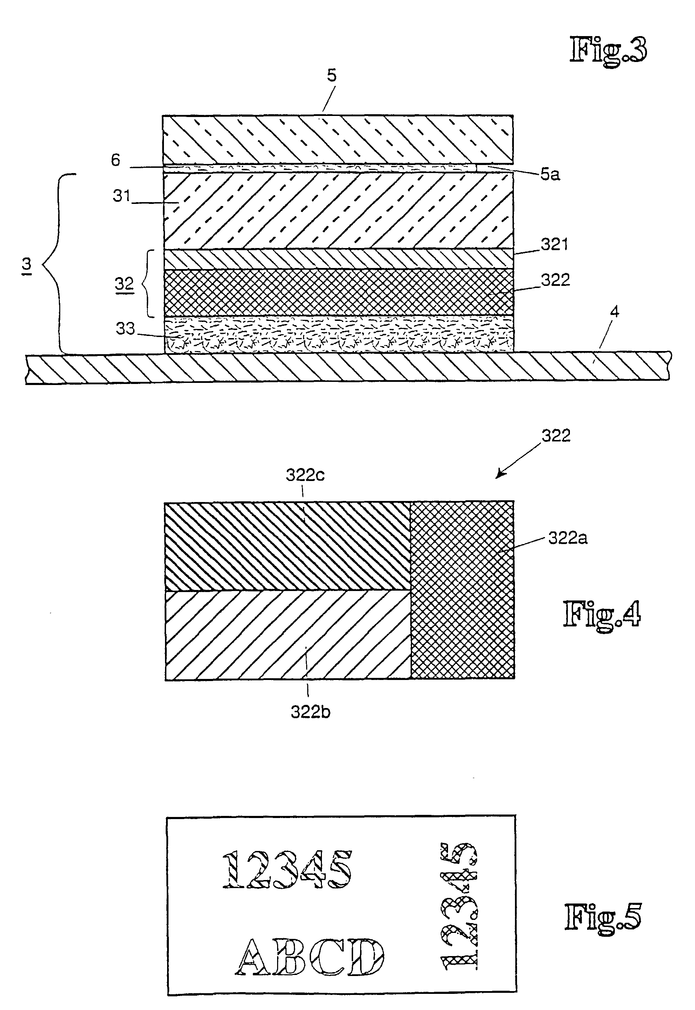

Figur 3 zeigt eine weitere Ausführungsform der Folie gemäß der Erfindung. Die Ausführungsform der Figur 3 unterscheidet sich von der Ausführungsform der Figur 1 dadurch, daß auf der Schutzfolie 31 ein für den Laserstrahl durchlässiger Abdeckabschnitt 5 befestigt ist. Zur Befestigung des Abdeckabschnitts 5 dient eine Schicht 6 aus einem ablösbaren transparenten Klebstoff. Ein Randbereich 5a des Abdeckabschnitts 5 ist frei von Klebstoff. Dieser klebstofffreie Randbereich 5a dient als Ablösehilfe beim Entfernen des Abdeckabschnitts 5.

Ein aus der erfindungsgemäßen Folie ausgestanztes Etikett, wie es in Figur 3 gezeigt ist, kann auf einem Gegenstand, wie beispielsweise einem Motorengehäuse mittels seiner Klebstoffschicht 33 im Rahmen eines automatisierten Produktionsvorgangs befestigt werden. Es kann während des Produktionsvorganges mit einem Laser in der oben beschriebenen Weise beschriftet werden, wobei der Laserstrahl nicht nur die Schutzfolie 31, sondern auch den Abdeckabschnitt 5 und die Klebstoffschicht 6 weitgehend unbeeinflußt durchquert. Nach einer Lackierung des Gegenstandes wird der Abdeckabschnitt 5 zusammen mit der Farbschicht (nicht dargestellt), die sich auf diesem während des Lackiervorgangs niedergeschlagen hat, entfernt, wozu es an dem klebstofffreien Randbereich 5a gegriffen wird. Andere an sich bekannte Arten von Abdeckabschnitten können selbstverständlich ebenfalls vorgesehen werden.

Der Abdeckabschnitt kann mit Aufdrucken (in der Zeichnung nicht zu erkennen) versehen sein, bei denen es sich beispielsweise um eine Bedienungsanleitung handeln kann. Wichtig ist dabei, daß der spektrale Absorptionsbereich des Materials, aus dem der Aufdruck besteht, nicht mit der Frequenz des Laserstrahls übereinstimmt, um die Absorption des Laserstrahls so gering wie möglich zu halten.

In Figur 4 ist die kontrastbildende Schicht 322 des in Figur 3 gezeigten Etiketts dargestellt. Die kontrastbildende Schicht 322 die durch Drucken aufgebracht worden ist, weist mehrere Bereiche 322a, 322b, 322c unterschiedlicher Farbe auf. Auf diese Weise können Schriften in verschiedenen Farben hergestellt werden. Wie in Figur 5 zu erkennen ist, die das beschriftete Etikett in der Draufsicht zeigt, ist das Etikett mit drei Schriftzügen versehen worden, deren Farben den Farben der Bereiche 322a, 322b und 322c entsprechen, wie durch die Wahl der gleichen Schraffierung in den Figuren 4 und 5 angedeutet ist. Auf diese Weise kann mit sehr einfachen Mitteln ein sehr ansprechendes mit einem Laser in unterschiedlichen Farben beschriftbares Etikett geschaffen werden.

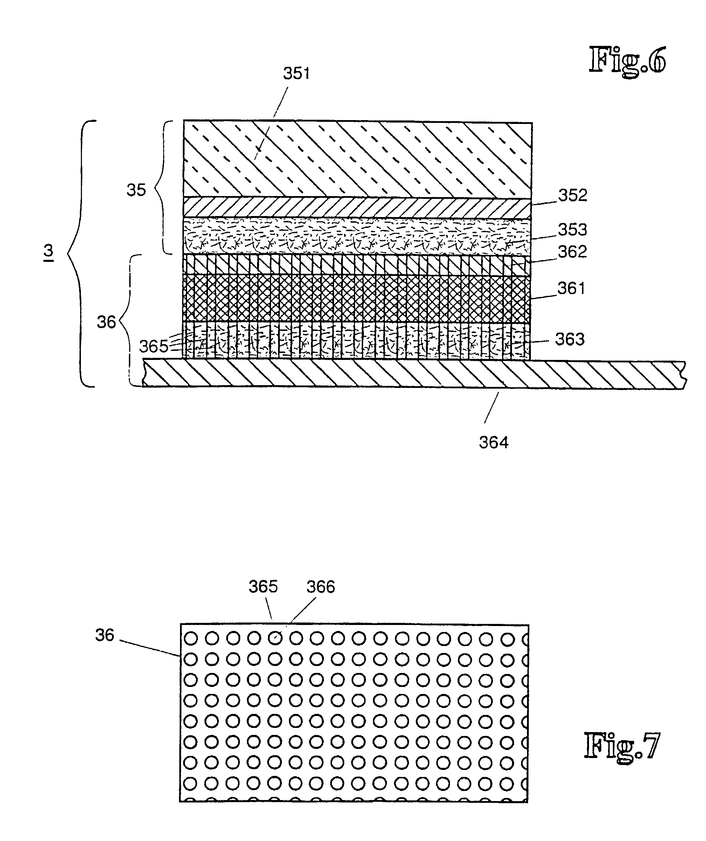

Figur 6 zeigt eine weitere Ausführungsform der Folie gemäß der Erfindung. Die Folie 3 besteht aus zwei zusammenkaschierten Teilfolien 35 und 36. Die erste Teilfolie 35 weist eine transparente Schicht 351 aus Polyethylenterephthalat (PET) auf, die an einer Seite (in der Figur 6 an der "unteren" Seite) mit metallischem Aluminium bedampft ist, so daß sich dort eine Aluminiumschicht 352 bildet. Die aufgedampfte Aluminiumschicht 352 weist eine solche Dicke auf, daß sie opak ist, d.h. daß Licht im sichtbaren Bereich diese Schicht nicht durchdringen kann. Die Aluminiumschicht 352 ist mit einer Schicht aus einem transparenten Haftklebstoff 353 bedeckt.

Die zweite Teilfolie 36 weist eine Schicht aus weißem Polyethylenterephthalat (PET) 361 auf, die mit einer Schicht aus Flexodruckfarben 362 bedruckt ist. Der Druck kann - wie im Ausführungsbeispiel der Figur 4 gezeigt - Bereiche unterschiedlicher Farben aufweisen (in der Schnittdarstellung der Figur 6 nicht zu erkennen).

Die zweite Oberfläche der weißen PET-Folie 361 ist mit Haftklebstoff 363 beschichtet. Mit dieser Schicht aus Haftklebstoff 363 haftet der Folienverbund auf einer Trägerfolie 364, die eine klebstoffabweisende Glattschicht aufweist, so daß die Trennung zwischen der Schicht aus Haftklebstoff 363 und der Trägerfolie 364 ohne Mühe möglich ist.

Zur Herstellung des in Figur 6 gezeigten Etiketts werden die Teilfolien 35 und 36 zusammenlaminiert, worauf dann Etiketten wie in Figur 6 gezeigt ausgestanzt werden. Die Stanzung erfolgt dabei so, daß die Trägerfolie 364 nicht durchstanzt wird.

Die Ausführungsform der Figur 6 zeichnet sich durch eine besonders einfache kostengünstige Herstellung aus, da die zweite Teilfolie 36 eine handelsübliche Folie darstellt und die erste Teilfolie 35 ohne großen Aufwand herzustellen ist.

Die kontrastbildende Schicht besteht in diesem Ausführungsbeispiel aus der weißen PET-Schicht 361 in Verbindung mit der Schicht aus Flexodruckfarben 362.

Die Ausführungsform der Figur 6 unterscheidet sich von den oben beschriebenen Ausführungsformen im wesentlichen durch die Zwischenschaltung der Haftklebstoffschicht 353, die sich unter herstellungstechnischen Gesichtspunkten als besonders vorteilhaft erwiesen hat. Die einmal hergestellte Teilfolie 35 kann beispielsweise einfach mit einer zweiten Teilfolie 36, beispielsweise zur Auswahl einer entsprechenden Hintergrundfarbe, kombiniert werden.

Darüber hinaus eignet sich die Ausführungsform der Figur 6 vorzüglich zur Anbringung von Sicherheitsstanzungen 365. Wie aus der Figur 6 zu ersehen ist, ist die Teilfolie 36 durch Sicherheitsstanzungen 365 in verschiedene Segmente unterteilt. Figur 7 zeigt die Teilfolie 36 in der Draufsicht. Die Form der Sicherheitsstanzungen 365 ist so gewählt, daß sich in der Draufsicht zahlreiche kreisförmige Segmente 366 ergeben. Bei einem Versuch, die Folie 3 von dem Untergrund abzulösen, auf dem sie mit ihrer Klebstoffschicht 363 nach ihrem Entfernen von der Trägerschicht 364 haftet, wird sich die Teilfolie 36 teilen. Die kreisförmigen Segmente 366 der Teilfolie werden auf dem Untergrund haften bleiben, während die übrigen Teile der Teilfolie 36 sich von dem Untergrund abziehen lassen. Die Folie 3 ist daher unwiederbringlich beschädigt und kann nicht mehr auf einem anderen Gegenstand angebracht werden, ohne daß die Beschädigung auffällt. Produktfälschungen können somit wirksam vermieden werden.

Selbstverständlich können anstelle einer Sicherheitsstanzung mit dem gezeigten Kreismuster auch Sicherheitsstanzungen mit jedem beliebigen anderen Muster verwendet werden. Auch Bildsymbole, Buchstaben und Schriftzüge können hierzu verwendet werden.

Wenn, wie in Figur 6 gezeigt, die Sicherheitsstanzungen 365 sich auch durch die Schicht aus Flexodruckfarben 362 hindurch erstrecken, sind diese als leichte Unebenheiten auf der transparenten Schicht 351 fühlbar und sichtbar. Dies kann in manchen Anwendungsfällen erwünscht sein, beispielsweise, wenn die Sicherheitsstanzungen 365 in der Form eines Firmenlogos vorgesehen sind.

Wenn sich dagegen nach einer Ausführungsvariante (nicht gezeigt) die Sicherheitsstanzungen nur durch die Folie 361 und die Klebstoffschicht 363, nicht jedoch durch die Farbschicht 362 hindurch erstrecken, können die durch die Sicherheitsstanzungen hervorgerufenen leichten Unebenheiten durch die Farbschicht 362 ausgeglichen werden, so daß sie nach außen nicht sichtbar und nicht fühlbar sind. In diesem Fall wird ein Fälscher, der versucht, das Etikett zu entfernen und auf einem anderen Gegenstand anzubringen, durch das Vorhandensein der Sicherheitsstanzungen 365 überrascht und entlarvt, da das Etikett durch den Ablöseversuch auffällig beschädigt wird.

Häufig versuchen Produktfälscher Etiketten auch unter Anwendung von Wärme abzulösen, da durch Wärme die Klebkraft von Haftklebstoffen vermindert wird. Im Fall des in Figur 6 gezeigten Etiketts findet jedoch die Auftrennung der mit den Sicherheitsstanzungen 365 versehenen Folie auch bei Anwendung von Wärme statt, da durch die Wärme sowohl die Haftklebstoffschicht 363 als auch die Haftklebstoffschicht 353 beeinflußt werden. Das bedeutet, daß die in Figur 7 ausgestanzten kreisförmigen Segmente 366 sich leichter von der Schicht 35 trennen und somit trotz Schwächung der Klebkraft der Klebstoffschicht 363 auf dem Gegenstand verbleiben, auf dem das Etikett angebracht war und auf diese Weise die gewollte Beschädigung des Etiketts herbeiführen.

## Patentansprüche

1. Mit einem Laserstrahl (2) beschriftbare Folie (3), die mindestens eine für den Laserstrahl (2) durchlässige Schutzfolie (31; 351) aufweist, auf deren Unterseite ein durch den Laserstrahl (2) veränderbares Medium (32) angeordnet ist, wobei das durch den Laserstrahl (2) veränderbare Medium (32) mindestens eine opake, durch den Laserstrahl (2) ablatierbare Schicht (321; 352) aufweist, **dadurch gekennzeichnet**, daß das durch den Laserstrahl (2) veränderbare Medium (32) zusätzlich mindestens eine gegen den Laserstrahl weitgehend resistente kontrastbildende Schicht (322; 34; 361, 362) aufweist.

2. Folie nach Anspruch 1, dadurch gekennzeichnet, daß die opake, durch den Laserstrahl (2) ablatierbare Schicht (321; 352) eine überwiegend metallische Schicht ist.

3. Folie nach Anspruch 1 oder 2, dadurch gekennzeichnet, daß die opake, durch den Laserstrahl (2) ablatierbare Schicht (321; 352) eine Metallegierung enthält.

4. Folie nach Anspruch 2 oder 3, dadurch gekennzeichnet, daß es sich bei der metallischen Schicht (321; 352) um eine auf die Schutzfolie (31; 351) aufgedampfte Metallisierung handelt.

5. Folie nach Anspruch 2 oder 3, dadurch gekennzeichnet, daß es sich bei der metallischen Schicht (321; 352) um eine auf die Schutzfolie (31; 351) aufgesputterte Metallisierung handelt.

6. Folie nach einem der Ansprüche 2 bis 5, dadurch gekennzeichnet, daß es sich bei der metallischen Schicht (321; 352) um eine Aluminiumschicht handelt.

7. Folie nach einem der Ansprüche 1 bis 6, dadurch gekennzeichnet, daß die opake, durch den Laserstrahl (2) ablatierbare Schicht (321; 352) mindestens ein Hologramm enthält.

8. Folie nach mindestens einem der Ansprüche 1 bis 7, dadurch gekennzeichnet, daß die opake, durch den Laserstrahl (2) ablatierbare Schicht (321; 352) eine Färbung aufweist.

9. Folie nach mindestens einem der Ansprüche 1 bis 8, dadurch gekennzeichnet, daß die opake, durch den Laserstrahl (2) ablatierbare Schicht (321; 352) eine Dicke von 0,1 µm bis 0,4 µm aufweist.

10. Folie nach mindestens einem der Ansprüche 1 bis 9, dadurch gekennzeichnet, daß die kontrastbildende Schicht (322; 34; 361, 362) eine Färbung aufweist.

11. Folie nach Anspruch 10, dadurch gekennzeichnet, daß die Färbung der kontrastbildenden Schicht (322) mehrere Bereiche (322a, 322b, 322c) unterschiedlicher Farbe umfaßt.

12. Folie nach mindestens einem der Ansprüche 1 bis 11, dadurch gekennzeichnet, daß die kontrastbildende Schicht (322; 34) auf die opake, durch den Laserstrahl (2) ablatierbare Schicht (321) aufgetragen ist.

13. Folie nach mindestens einem der Ansprüche 1 bis 12, dadurch gekennzeichnet, daß die kontrastbildende Schicht (322) auf die opake, durch den Laserstrahl (2) ablatierbare Schicht (321) aufgedruckt ist.

14. Folie nach mindestens einem der Ansprüche 1 bis 13, dadurch gekennzeichnet, daß die kontrastbildende Schicht (322) auf die opake, durch den Laserstrahl (2) ablatierbare Schicht (321) auflackiert ist.

15. Folie nach mindestens einem der Ansprüche 1 bis 14, dadurch gekennzeichnet, daß es sich bei der kontrastbildenden Schicht (322) um mindestens eine zusätzliche Folie handelt.

16. Folie nach Anspruch 15, dadurch gekennzeichnet, daß die zusätzliche Folie eine Färbung aufweist.

17. Folie nach Anspruch 15 oder 16, dadurch gekennzeichnet, daß die zusätzliche Folie aus Kunststoff besteht.

18. Folie nach Anspruch 17, dadurch gekennzeichnet, daß es sich bei dem Kunststoff um mindestens eines der nachfolgend genannten Materialien handelt: Polyethylen (PE), Polyethylenterephthalat (PET), Polyvinylchlorid (PVC).

19. Folie nach mindestens einem der Ansprüche 1 bis 13, dadurch gekennzeichnet, daß es sich bei der kontrastbildenden Schicht um mindestens eine gegen Laserstrahlung weitgehend resistente Klebstoffschicht (34) handelt.

20. Folie nach Anspruch 19, dadurch gekennzeichnet, daß die Klebstoffschicht (34) eine Färbung aufweist.

21. Folie nach mindestens einem der Ansprüche 1 bis 18, dadurch gekennzeichnet, daß auf der der opaken, durch den Laserstrahl (2) ablatierbaren Schicht (321; 352) abgewandten Seite der kontrastbildenden Schicht (322; 361, 362) zumindest stellenweise eine Klebstoffschicht (33; 363) angeordnet ist.

22. Folie nach mindestens einem der Ansprüche 19 bis 21, dadurch gekennzeichnet, daß die Klebstoffschicht mit einem klebstoffabweisenden Trägermaterial (4; 364) bedeckt ist.

23. Folie nach mindestens einem der Ansprüche 1 bis 22, dadurch gekennzeichnet, daß die Schutzfolie (31; 351) aus Kunststoff besteht.

24. Folie nach Anspruch 23, dadurch gekennzeichnet, daß es sich bei dem Kunststoff um mindestens eines der nachfolgend genannten Materialien handelt: Polyester, Acrylat, Polyethylen (PE), Polyethylenterephthalat (PET), Polypropylen (PP), Polyvinylchlorid (PVC).

25. Folie nach einem der Ansprüche 1 - 24, dadurch gekennzeichnet, daß sie in Etikettenform gestanzt oder ausgeschnitten ist.

26. Folie nach Anspruch 25, dadurch gekennzeichnet, daß auf der Schutzfolie (31; 351) mindestens ein für den Laserstrahl durchlässiger Abdeckabschnitt (5) angeordnet ist.

27. Folie nach Anspruch 26, dadurch gekennzeichnet, daß auf dem Abdeckabschnitt (5) mindestens ein für den Laserstrahl durchlässiger Aufdruck vorgesehen ist.

28. Folie nach Anspruch 26 oder 27, dadurch gekennzeichnet, daß der für den Laserstrahl durchlässige Abdeckabschnitt (5) mit einem ablösbaren Klebstoff (6) an der Schutzfolie (31; 351) befestigt ist.

29. Folie nach Anspruch 28, dadurch gekennzeichnet, daß der Abdeckabschnitt (5) einen klebstofffreien Rand (5a) aufweist.

30. Folie nach einem der Ansprüche 1 bis 29, dadurch gekennzeichnet, daß die Schutzfolie (351) und die durch den Laserstrahl (2) ablatierbare Schicht (352) in einer Teilfolie (35) angeordnet sind, daß die kontrastbildende Schicht (361, 362) in einer zweiten Teilfolie (36) angeordnet ist, und daß die erste Teilfolie (35) mit der zweiten Teilfolie (36) durch eine Klebstoffschicht (353) verbunden ist.

31. Folie nach Anspruch 30, dadurch gekennzeichnet, daß die zweite Teilfolie (36) durch Sicherheitsstanzungen (365) segmentiert ist.

## Claims

1. Film (3) which can be inscribed by a laser beam (2) and comprises at least one protective film (31; 51) which is transmissive to the laser beam (2) and on the underside of which a medium (32) which can be altered by the laser beam (2) is disposed, wherein the medium (32) which can be altered by the laser beam (2) comprises at least one opaque layer (321; 352) which can be ablated by the laser beam (2), characterised in that the medium (32) which can be altered by the laser beam (2) additionally comprises at least one contrasting layer (322; 34; 361, 362) which is largely resistant to the laser beam.

2. Film according to Claim 1, characterised in that the opaque layer (321; 352) which can be ablated by the laser beam (2) is a predominantly metallic layer.

3. Film according to Claim 1 or 2, characterised in that the opaque layer (321; 352) which can be ablated by the laser beam (2) contains a metal alloy.

4. Film according to Claim 2 or 3, characterised in that the metallic layer (321; 352) is a metal coating which is vapour-deposited on the protective film (31; 351).

5. Film according to Claim 2 or 3, characterised in that the metallic layer (321; 352) is a metal coating which is sputtered onto the protective film (31; 351).

6. Film according to any one of Claims 2 to 5, characterised in that the metallic layer (321; 352) is an aluminium layer.

7. Film according to any one of Claims 1 to 6, characterised in that the opaque layer (321; 352) which can be ablated by the laser beam (2) contains at least one hologram.

8. Film according to at least one of Claims 1 to 7, characterised in that the opaque layer (321; 352) which can be ablated by the laser beam (2) has colouring.

9. Film according to at least one of Claims 1 to 8, characterised in that the opaque layer (321; 352) which can be ablated by the laser beam (2) is between 0.1 im and 0.4 im thick.

10. Film according to at least one of Claims 1 to 9, characterised in that the contrasting layer (322; 34; 361, 362) has colouring.

11. Film according to Claim 10, characterised in that the colouring of the contrasting layer (322) comprises a plurality of regions (322a, 322b, 322c) of different colours.

12. Film according to at least one of Claims 1 to 11, characterised in that the contrasting layer (322; 34) is applied to the opaque layer (321) which can be ablated by the laser beam (2).

13. Film according to at least one of Claims 1 to 12, characterised in that the contrasting layer (322) is printed onto the opaque layer (321) which can be ablated by the laser beam (2).

14. Film according to at least one of Claims 1 to 13, characterised in that the contrasting layer (322) is a varnish layer applied to the opaque layer (321) which can be ablated by the laser beam (2) .

15. Film according to at least one of Claims 1 to 14, characterised in that the contrasting layer (322) is at least one additional film.

16. Film according to Claim 15, characterised in that the additional film has colouring.

17. Film according to Claim 15 or 16, characterised in that the additional film consists of a plastics material.

18. Film according to Claim 17, characterised in that the plastics material is at least one of the following materials: polyethylene (PE), polyethylene terephthalate (PET), polyvinyl chloride (PVC).

19. Film according to at least one of Claims 1 to 13, characterised in that the contrasting layer is at least one adhesive layer (34) which is largely resistant to laser radiation.

20. Film according to Claim 19, characterised in that the adhesive layer (34) has colouring.

21. Film according to at least one of Claims 1 to 18, characterised in that an adhesive layer (33; 363) is disposed at least in parts on the side of the contrasting layer (322; 361) which is remote from the opaque layer (321; 352) which can be ablated by the laser beam (2).

22. Film according to at least one of Claims 19 to 21, characterised in that the adhesive layer is covered with an adhesive-repellent carrier material (4; 364) .

23. Film according to at least one of Claims 1 to 22, characterised in that the protective film (31; 351) consists of a plastics material.

24. Film according to Claim 23, characterised in that the plastics material is at least one of the following materials: polyester, acrylate, polyethylene (PE), polyethylene terephthalate (PET), polypropylene (PP), polyvinyl chloride (PVC).

25. Film according to any one of Claim s 1 - 24, characterised in that it is punched or cut out in the form of labels.

26. Film according to Claim 25, characterised in that at least one covering portion (5) which is transmissive to the laser beam is disposed on the protective film (31; 351).

27. Film according to Claim 26, characterised in that at least one imprint which is transmissive to the laser beam is provided on the covering portion (5).

28. Film according to Claim 26 or 27, characterised in that the covering portion (5) which is transmissive to the laser beam is secured to the protective film (31; 351) by a removable adhesive (6).

29. Film according to Claim 28, characterised in that the covering portion (5) has an adhesive-free edge (5a).

30. Film according to any one of Claims 1 to 29, characterised in that the protective film (351) and the layer (352) which can be ablated by the laser beam (2) are disposed in a sub-film (35), that the contrasting layer (361, 362) is disposed in a second sub-film (36), and that the first sub-film (35) is joined to the second sub-film (36) by an adhesive layer (353).

31. Film according to Claim 30, characterised in that the second sub-film (36) is segmented by security punchings (365).

## Revendications

1. Feuille (3) sur laquelle il est possible de porter des inscriptions au moyen d'un faisceau laser (2) et qui comprend au moins une feuille de protection (31 ; 351), pouvant être traversée par le faisceau laser (2), sur la face inférieure de laquelle est disposé un milieu (32) pouvant être modifié au moyen du faisceau laser (2), le milieu (32) pouvant être modifié au moyen du faisceau laser (2) comprenant au moins une couche opaque (321 ; 352) pouvant faire l'objet d'une. ablation au moyen du faisceau laser (2), caractérisée en ce que le milieu (32) pouvant être modifié au moyen du faisceau laser (2) comprend en outre au moins une couche formant contraste (322 ; 34 ; 361, 362) résistant dans une large mesure au faisceau laser.

2. Feuille suivant la revendication 1, caractérisée en ce que la couche opaque (321 ; 352) pouvant faire l'objet d'une ablation au moyen du faisceau laser (2) est une couche qui, d'une manière prépondérante, est métallique.

3. Feuille suivant la revendication 1 ou 2, caractérisée en ce que la couche opaque (321 ; 352) pouvant faire l'objet d'une ablation au moyen du faisceau laser (2) contient un alliage métallique.

4. Feuille suivant la revendication 2 ou 3, caractérisée en ce que, pour ce qui concerne la couche métallique (321 ; 352), il s'agit d'une métallisation sous vide déposée sur la feuille de protection (31 ; 351).

5. Feuille suivant la revendication 2 ou 3, caractérisée en ce que, pour ce qui concerne la couche métallique (321 ; 352), il s'agit d'une métallisation déposée par pulvérisation cathodique sur la feuille de protection (31 ; 351).

6. Feuille suivant l'une des revendications 2 à 5, caractérisée en ce que, pour ce qui concerne la couche métallique (321 ; 352), il s'agit d'une couche d'aluminium.

7. Feuille suivant l'une des revendications 1 à 6, caractérisée en ce que la couche opaque (321 ; 352) pouvant faire l'objet d'une ablation au moyen du faisceau laser (2) contient au moins un hologramme.

8. Feuille suivant au moins l'une des revendications 1 à 7, caractérisée en ce que la couche opaque (321 ; 352) pouvant faire l'objet d'une ablation au moyen du faisceau laser (2) comporte une coloration.

9. Feuille suivant au moins l'une des revendications 1 à 8, caractérisée en ce que la couche opaque (321 ; 352) pouvant faire l'objet d'une ablation au moyen du faisceau laser (2) possède une épaisseur de 0,1 *µ*m à 0,4 *µ*m.

10. Feuille suivant au moins l'une des revendications 1 à 9, caractérisée en ce que la couche formant contraste (322 ; 34 ; 361, 362) comporte une coloration.

11. Feuille suivant la revendication 10, caractérisée en ce que la coloration de la couche formant contraste (322) présente plusieurs zones (322a, 322b, 322c) de couleurs différentes.

12. Feuille suivant au moins l'une des revendications 1 à 11, caractérisée en ce que la couche formant contraste (322 ; 34) est posée par-dessus la couche opaque (321) pouvant faire l'objet d'une ablation au moyen du faisceau laser (2).

13. Feuille suivant au moins l'une des revendications 1 à 12, caractérisée en ce que la couche formant contraste (322) est appliquée par impression sur la couche opaque (321) pouvant faire l'objet d'une ablation au moyen du faisceau laser (2).

14. Feuille suivant au moins l'une des revendications 1 à 13, caractérisée en ce que la couche formant contraste (322) est appliquée sous forme de laque par-dessus la couche opaque (321) pouvant faire l'objet d'une ablation au moyen du faisceau laser (2).

15. Feuille suivant au moins l'une des revendications 1 à 14, caractérisée en ce que, pour ce qui concerne la couche formant contraste (322), il s'agit d'au moins une feuille supplémentaire.

16. Feuille suivant la revendication 15, caractérisée en ce que la feuille supplémentaire comporte une coloration.

17. Feuille et suivant la revendication 15 ou 16, caractérisée en ce que la feuille supplémentaire est en matière plastique.

18. Feuille suivant la revendication 17, caractérisée en ce que, pour ce qui concerne la matière plastique, il s'agit d'au moins l'une des matières indiquées ci-après : polyéthylène (PE), polyéthylène téréphtalate (PET), polyvinyle chlorure (PVC).

19. Feuille suivant au moins l'une des revendications 1 à 13, caractérisée en ce que, pour ce qui concerne la couche formant contraste, il s'agit d'au moins une couche de colle (34) résistant dans une large mesure au rayonnement laser.

20. Feuille suivant la revendication 19, caractérisée en ce que la couche de colle (34) comporte une coloration.

21. Feuille suivant au moins l'une des revendications 1 à 18, caractérisée en ce qu'une couche de colle (33 ; 363) est disposée, au moins par endroits, sur la face de la couche formant contraste (322 ; 361, 362) qui est située à l'opposé de la couche opaque (321 ; 352) pouvant faire l'objet d'une ablation au moyen du faisceau laser (2).

22. Feuille suivant au moins l'une des revendications 19 à 21, caractérisée en ce que la couche de colle est recouverte d'une matière de support (4 ; 364) refusant la colle.

23. Feuille suivant au moins l'une des revendications 1 à 22, caractérisée en ce que la feuille de protection (31 ; 351) est en matière plastique.

24. Feuille suivant la revendication 23, caractérisée en ce que, pour ce qui concerne la matière plastique, il s'agit d'au moins l'une des matières indiquées ci-après polyester, acrylate, polyéthylène (PE), polyéthylène téréphtalate (PET), polypropylène (PP), polyvinyle chlorure (PVC).

25. Feuille suivant l'une des revendications 1- 24, caractérisée en ce qu'elle est façonnée à l'emporte-pièce ou est découpée en forme d'étiquette.

26. Feuille suivant la revendication 25, caractérisée en ce qu'au moins une section de recouvrement (5) pouvant être traversée par le faisceau laser est disposée par-dessus la feuille de protection (31 ; 351).

27. Feuille suivant la revendication 26, caractérisée en ce qu'au moins une impression pouvant être traversée par le faisceau laser est prévue sur la section de recouvrement (5).

28. Feuille suivant la revendication 26 ou 27, caractérisée en ce que la section de recouvrement (5) pouvant être traversée par le faisceau laser est fixée sur la feuille de protection (31 ; 351) au moyen d'une colle (6) pouvant être décollée.

29. Feuille suivant la revendication 28, caractérisée en ce que la section de recouvrement (5) comporte un bord (5a) dépourvu de colle.

30. Feuille suivant l'une des revendications 1 à 29, caractérisée en ce que la feuille de protection (351) et la couche (352) pouvant faire l'objet d'une ablation au moyen du faisceau laser (2) sont disposées dans une feuille partielle (35), en ce que la couche formant contraste (361, 362) est disposée dans une seconde feuille partielle (36) et en ce que la première feuille partielle (35) est rendue solidaire de la seconde feuille partielle (36) au moyen d'une couche de colle (353).

31. Feuille suivant la revendication 30, caractérisée en ce que la seconde feuille partielle (36) est segmentée au moyen de découpes à l'emporte-pièce (365) de sécurité.
